(19) Europäisches Patentamt / European Patent Office / Office européen des brevets

(11) EP 3 751 497 A1

(12) EUROPEAN PATENT APPLICATION

(43) Date of publication:
16.12.2020 Bulletin 2020/51

(51) Int Cl.:
G06Q 40/00 (2012.01)

(21) Application number: 20176700.1

(22) Date of filing: 27.05.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.06.2019 JP 2019108519

(71) Applicant: Uchida Build & Ceram Inc.
Tokyo (JP)

(72) Inventor: UCHIDA, Hiroshi
Tokyo (JP)

(74) Representative: Strehl Schübel-Hopf & Partner
Maximilianstrasse 54
80538 München (DE)

(54) **FINANCIAL OR ECONOMIC ANALYSIS SYSTEM AND METHOD**

(57) An object is to provide a financial or economic analysis system that is capable of representing a financial or economic situation with high accuracy. By using information received as input from an interest-rate-information acquiring means 11, a money-quantity-information acquiring means 12, a price-information acquiring means 13, and a GDP-information acquiring means 14, a computing means 15 determines data that can be replaced by a physical quantity used in electromagnetic wave analysis, and uses the data in financial or economic analysis. The data includes data representing a rotational coefficient relating to an interest rate, data representing the quantity of money, data representing a price coefficient, and a data representing a GDP.

## FIG. 1

**Description**

Background of the Invention

1. Field of the Invention

The present disclosure relates to a financial or economic analysis system and method for analyzing the financial or economic situation.

For analyzing the financial and economic situation, predetermined items are quantified by using, for example, the quantity of circulating money and the interest rate level.

2. Description of the Related Art

For example, an apparatus, a method, and a program are disclosed in which, with a means for calculating a first parameter on the basis of market price data and a means for calculating a second parameter on the basis of the first parameter, a relational equation on price fluctuation is set using these parameters to enable the analysis of inflation and the detection of timing of inflation (see, e.g., PTL 1).

Also, for example, an interest rate (debt) projecting apparatus is disclosed, in which a series of random numbers based on a predetermined probability distribution is generated by a random number generating unit on the basis of given parameters and, by applying a predetermined computation to the values of the random numbers generated by the random number generating unit, the level of interest rate and the level of debt at each point in time are projected (see, e.g., PTL 2).

[PTL]

    PTL 1: Japanese Unexamined Patent Application Publication No. 2003-216883
    PTL 2: Japanese Unexamined Patent Application Publication No. 2003-223542

Summary of the Invention

The apparatuses and others described above are configured to perform a predetermined computation so as to represent or project the economic situation. Examples of an equation representing the economic situation include the Fisher's equation of exchange. The Fisher's equation of exchange states that the product of a quantity of money M and a monetary income circulation velocity V is equal to the product of a price P and a goods and services transaction volume T in a given period of time (MV = PT).

The Fisher's equation of exchange does not hold true when not the entire quantity of money M circulates and, for example, part of the money goes into deposits and savings. Also, if the transaction volume T includes the volume of inventories, the Fisher's equation of exchange does not strictly hold true. Therefore, the proportional relation between the quantity of money M and the price P represented by the Fisher's equation of exchange is not deemed to reflect the real economic situation.

The Cambridge equation is also known as an equation representing the economic situation. The Cambridge equation states that the product of the price P, Y representing the real GDP, and the Marshallian k is equal to the quantity of money M (M = kPY). In the Cambridge equation, the quantity of money M is the sum of the quantity of money serving as a means of circulation and the quantity of money serving as a means of store of value.

The Marshallian k represents the inverse of the monetary income circulation velocity V, or the ratio of money holding to nominal national income.

The Marshallian k serves as an index for determining whether the supply of money is appropriate relative to the money supply (e.g., the level of production or GDP). Specifically, the Marshallian k indicates, for example, how many times greater the supply of money is than the GDP which is taken as "1". That is, the greater the Marshallian k, the more the quantity of money circulating in the economic area.

Since the Cambridge equation includes money that is not in use (means of store of value), it is necessary to verify the stability of the Marshallian k. For this reason, it is not necessarily true that the Cambridge equation is self-evidently correct.

The present disclosure has been made in view of the problems described above, and provides a financial or economic analysis system that is capable of representing the financial or economic situation with high accuracy.

Solution to Problem

A financial or economic analysis system according to the present disclosure includes information acquiring means for acquiring information representing a financial or economic situation, and computing means for determining, by computation, a numerical value representing the financial or economic situation using information received as input from the information acquiring means. From the information received as input from the information acquiring means, the computing means determines data that can be replaced by a physical quantity used in electromagnetic wave analysis, and uses the data in financial or economic analysis. The data includes data representing a rotational coefficient relating to an interest rate, data representing the quantity of money, data representing a price coefficient, and data representing a GDP.

The computing means determines, using the following relational equation, any factor used in the financial or economic analysis:

$$Y = r \cdot M \cdot P$$

where r is the data representing the rotational coefficient, M is the data representing the quantity of money, P is the data representing the price coefficient, and Y is the data representing the GDP.

From data received as input from the information acquiring means, the computing means determines an object coefficient representing a degree of complexity in financial or economic activities and a human coefficient representing a degree of anxiety in market sentiment in the financial or economic activities. The computing means determines the price coefficient which is a product of the object coefficient and the human coefficient.

The computing means determines the data representing the quantity of money by using data received as input from the information acquiring means and representing energy consumption relating to economic activities.

From data received as input from the information acquiring means, the computing means determines data representing savings that can be replaced by a reflected wave in the electromagnetic wave analysis. Then, by taking into account the data representing the savings, the computing means determines the data representing the quantity of money.

The computing means replaces the data representing the rotational coefficient with data representing a human brain wave frequency. Then, in accordance with a pathological analysis technique relating to a brain wave pattern, the computing means performs a computation for the financial or economic analysis.

A financial or economic analysis method according to the present disclosure includes a first step of acquiring, by information acquiring means, information used in financial or economic analysis; and a second step of inputting the information acquired by the information acquiring means to computing means, determining data that can be replaced by a physical quantity used in electromagnetic wave analysis, and using the data in financial or economic analysis. The data includes data representing a rotational coefficient relating to an interest rate, data representing the quantity of money, data representing a price coefficient, and data representing a GDP. The second step includes a third step of determining, using the following relational equation, any factor used in the financial or economic analysis:

$$Y = r \cdot M \cdot P$$

where r is the data representing the rotational coefficient, M is the data representing the quantity of money, P is the data representing the price coefficient, and Y is the data representing the GDP.

The present disclosure makes it possible to analyze the financial or economic situation with high accuracy.

Brief Description of the Drawings

Fig. 1 is an explanatory diagram schematically illustrating a configuration of a financial or economic analysis system according to an embodiment of the present disclosure.

Fig. 2 is an explanatory diagram showing each coefficient used by a computing means illustrated in Fig. 1.

Figs. 3(a) and 3(b) are explanatory diagrams illustrating a relation between microwave wavelength and attenuation.

Fig. 4 is an explanatory diagram illustrating a relation between brain wave and the inverse of borrowing rate.

Description of the Preferred Embodiment

An embodiment of the present invention will now be described.

(Embodiment)

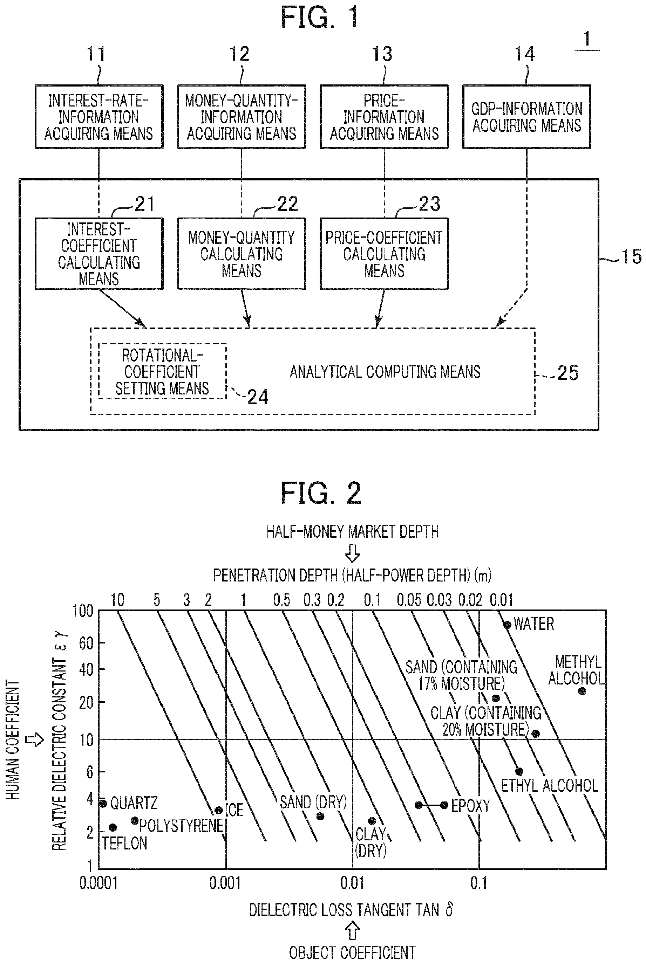

Fig. 1 is an explanatory diagram schematically illustrating a configuration of an analysis system 1 according to an embodiment of the present disclosure. The analysis system 1 includes an interest-rate-information acquiring means 11, a money-quantity-information acquiring means 12, a price-information acquiring means 13, a gross domestic product (hereinafter referred to as GDP)-information acquiring means 14, and a computing means 15.

The computing means 15 includes an interest-coefficient calculating means 21, a money-quantity calculating means 22, a price-coefficient calculating means 23, and an analytical computing means 25. The analytical computing means 25 includes a rotational-coefficient setting means 24.

The interest-rate-information acquiring means 11 is configured to collect information about interest rates implemented by financial institutions, such as banks, credit associations, and insurance companies, and supply, for example, data representing interest-rate information about the interest rates to the computing means 15.

The money-quantity-information acquiring means 12 is configured to collect information representing the quantity of money circulating in the market and information representing the quantity of money existing in the market (e.g., deposits), and supply data dealing with information about these quantities of money to the computing means 15.

The price-information acquiring means 13 is configured to collect information representing, for example, prices in any region, and supply information representing information about the prices to the computing means 15.

The GDP-information acquiring means 14 is configured to process, for example, each piece of externally collected information to generate data representing information about a GDP, and supply the generated data to the computing means 15.

The computing means 15 includes, for example, a processor (or computer) that performs a predetermined computation (information processing), and also includes a storage means (e.g., database) for storing each piece of data.

The computing means 15 is connected to the interest-rate-information acquiring means 11, the money-quantity-information acquiring means 12, the price-information acquiring means 13, and the GDP-information acquiring means 14 each serving as, for example, a data input means.

The interest-rate-information acquiring means 11, the money-quantity-information acquiring means 12, the price-information acquiring means 13, and the GDP-information acquiring means 14 are individually connected, for example, to an external server (not shown) through a communication line.

The interest-rate-information acquiring means 11, the money-quantity-information acquiring means 12, the price-information acquiring means 13, the GDP-information acquiring means 14 or the like may each include a database (not shown) and may be configured to store each piece of information externally acquired during a predetermined period of time.

The computing means 15 includes, for example, the interest-coefficient calculating means 21, the money-quantity calculating means 22, the price-coefficient calculating means 23, the rotational-coefficient setting means 24, and the analytical computing means 25.

The interest-coefficient calculating means 21, the money-quantity calculating means 22, the price-coefficient calculating means 23, the rotational-coefficient setting means 24, the analytical computing means 25 or the like are configured to perform, for example, a predetermined computation in accordance with a software program stored in the computing means 15.

The interest-coefficient calculating means 21, the money-quantity calculating means 22, the price-coefficient calculating means 23, the rotational-coefficient setting means 24, the analytical computing means 25 or the like may be configured as a software program that operates, for example, in a work area of the computing means 15.

Operations will now be described.

When analyzing, for example, the economic situation in a predetermined period of time, the analysis system 1 externally collects, for example, interest rates (interest rates implemented by financial institutions, such as banks) during the predetermined period of time using the interest-rate-information acquiring means 11 and inputs data relating to the interest rates to the interest-coefficient calculating means 21.

The money-quantity-information acquiring means 12 externally collects, for example, data representing the quantity of money existing during the predetermined period of time, and inputs data representing information about the quantity of money to the money-quantity calculating means 22.

The price-information acquiring means 13 externally collects information about prices during the predetermined period of time, and inputs data representing the information about prices to the computing means 15 (price-coefficient calculating means 23).

The GDP-information acquiring means 14 externally acquires information (data) relating to the GDP during the predetermined period of time, and inputs the acquired information to the computing means 15.

The computing means 15 acquires, for example at a given point in time, data representing the interest rates, data representing the quantity of money, data relating to prices, and data relating to the GDP.

From data representing the interest rates that are set and managed during a given period of time by, for example, each financial institution and to be evaluated or analyzed, the interest-coefficient calculating means 21 determines the interest rate during the period. Alternatively, the interest-coefficient calculating means 21 identifies (or determines) the base rate (interest rate) during the given period of time from the data representing information about interest rates received as input from the interest-rate-information acquiring means 11.

The rotational-coefficient setting means 24 performs processing (e.g., computation) for converting the interest rate determined by the interest-coefficient calculating means 21 to a rotational coefficient.

For example, the interest rate corresponding to one revolution of an engine is defined as 100%, and the interest rate corresponding to ten revolutions of the engine is defined as 10%. By conversion based on this definition, an interest rate of 0.01 % is expressed as an engine speed of 10000 rpm. That is, the interest rate is expressed as the inverse of the engine speed.

An equivalent to the engine speed (velocity of money) is defined as a rotational coefficient, and the inverse of the rotational coefficient is defined as an interest coefficient. Under this definition, the interest-coefficient calculating means 21 performs data processing which determines the interest coefficient from data representing information about the interest rate, and the rotational-coefficient setting means 24 performs, for example, data processing which determines (or sets) a rotational coefficient r from the interest coefficient.

The money-quantity calculating means 22 receives, as input, data representing information about the quantity of money from the money-quantity-information acquiring means 12 and determines (e.g., adds up) the quantity of money M existing during the given period of time.

The price-coefficient calculating means 23 receives, as input, data representing information about prices from the price-information acquiring means 13 and determines a price coefficient P during the given period of time.

The price coefficient P handled by the analysis system 1 is expressed by the product of an object coefficient and a human coefficient. The object coefficient is a coefficient representing the degree of simplicity or complexity (i.e., the degree of complexity in financial or economic activities), and the human coefficient is a coefficient representing the degree of security or anxiety (i.e., the degree of anxiety (market sentiment) in financial or economic activities).

Fig. 2 is an explanatory diagram showing each coefficient used by the computing means 15 illustrated in Fig. 1. The dielectric constant and the half-power depth of each material are plotted in the diagram, where the vertical axis represents a relative dielectric constant $\varepsilon\gamma$, the horizontal axis at the lower end represents a dielectric loss tangent $\tan\delta$, and the horizontal axis at the upper end represents the half-power depth (m).

For example, assume that materials having simple and straightforward molecular structures, such as quartz, Teflon (registered trademark), and polystyrene each shown in the drawing, are simple and straightforward materials that are new as production goods and highly inventive in terms of apparent technology.

Also assume, for example, that materials having complex molecular structures, such as epoxy and ethyl alcohol bearing hydroxyl groups, are complex and chaotic materials that are obsolete as production goods and less inventive in terms of apparent technology.

Under the assumption described above, the right and left direction (horizontal axis) at the lower end in the drawing represents the degree of "simplicity and straightforwardness" or "complexity and chaoticity". That is, the dielectric loss tangent $\tan\delta$ represented by the horizontal axis can be replaced by the degree (object coefficient) described above.

Also, when the relative dielectric constant $\varepsilon\gamma$ represented by the vertical axis in the drawing is replaced by a human coefficient and the half-power depth represented by the horizontal axis at the upper end of the drawing is replaced by a half-money market depth, the price coefficient P can be defined by being applied to the relation between the relative dielectric constant and dielectric loss tangent of the material (dielectric).

Thus, by using the data representing information about prices acquired from the price-information acquiring means 13, the price-coefficient calculating means 23 determines an object coefficient and a human coefficient, for example, by performing computation or conversion using a database, so as to calculate the price coefficient P from the object coefficient and the human coefficient.

Alternatively, as the data representing information about prices from the price-information acquiring means 13, the price-coefficient calculating means 23 may acquire data representing an object coefficient and data representing a human coefficient, so as to calculate the price coefficient P using the data representing the object coefficient and the data representing the human coefficient.

When calculating, for example, the GDP, the computing means 15 inputs the interest coefficient determined by the interest-coefficient calculating means 21 to the rotational-coefficient setting means 24 to determine the rotational coefficient r, and computes the following equation (1) using the quantity of money M determined by the money-quantity calculating means 22 and the price coefficient P determined by the price-coefficient calculating means 23:

$$Y = r \cdot M \cdot P \qquad \cdots (1)$$

where Y is the GDP.

Economic activities have been conventionally expressed, for example, by an equation using three elements, Y, M, and P (price).

For example, the Fisher's equation of exchange is described as follows:

$$M \cdot V = P1 \cdot T \quad \cdots (2)$$

where, in this equation (2), M is the total quantity of money, V is circulation velocity, P1 is price level, and T is transaction volume.

Also, the Cambridge equation is described as follows:

$$M = k \cdot P2 \cdot Y \quad \cdots (3)$$

where, in this equation (3), M is cash balance, k is proportionality constant (Marshallian k), P2 is price, and Y is real GDP.

Traditional economic policies have used a technique in which, on the basis of the equations (2) and (3), M is increased to increase P1 or P2. However, there have been some cases where P1 (or P2) is not increased even by increasing M.

Thus, since the price is not actually increased even by increasing the quantity of money, the position of P1 (or P2) in the equation is shifted and examined. This eventually produces a physical equation relating to a microwave heating device. That is, the financial or economic situation can be replaced and expressed, for example, by the physical characteristics of the microwave heating device.

For example, the relative dielectric constant $\varepsilon\gamma$ of a dielectric is replaced by a human coefficient as described above, and the dielectric loss tangent $\tan\delta$ of the

dielectric is replaced by an object coefficient as described above. Then, $\varepsilon\gamma\cdot\tan\delta$ is replaced by the price coefficient P, a frequency f is replaced by the rotational coefficient r, and a field intensity E is replaced by the quantity of money M.

Hence, a heating power density Pd in the microwave heating device can be replaced by a GDP. Thus, Y, or the GDP, can be determined by the equation (1).

Elements (e.g., rotational coefficient r, quantity of money M, and price coefficient P), each representing an economic situation, can be determined using the equation (1). If unable to externally acquire information relating to any of the elements each representing the financial or economic situation, the computing means 15 calculates, on the basis of the equation (1), the element that has been unable to be acquired.

Data representing the interest coefficient output from the interest-coefficient calculating means 21 is input to the analytical computing means 25 or to the rotational-coefficient setting means 24. Data representing the interest coefficient is data that can be replaced by each element relating to the operation of the microwave heating device, that is, a physical quantity used in electromagnetic wave analysis. The data representing the interest coefficient is converted to data representing the rotational coefficient r that can be replaced by the frequency f, which is a physical quantity.

Data representing the quantity of money M output from the money-quantity calculating means 22 and data representing the price coefficient P output from the price-coefficient calculating means 23 are input to the analytical computing means 25. When the GDP-information acquiring means 14 externally acquires data representing information about a GDP, the data representing information about the GDP is input to the analytical computing means 25.

The data representing the quantity of money M output from the money-quantity calculating means 22 is data that can be replaced by a physical quantity (e.g., field intensity E) used in electromagnetic wave analysis as described above, and the data representing the price coefficient P output from the price-coefficient calculating means 23 is data that can be replaced by a physical quantity (e.g., $\varepsilon\gamma\cdot\tan\delta$) used in electromagnetic wave analysis as described above.

When data representing information about the GDP is input to the computing means 15, the data may be converted, for example using a GDP (Y) conversion means (not shown), to data representing the GDP that can be replaced by a physical quantity (heating power density Pd) used in electromagnetic wave analysis, and the resulting data is input to the analytical computing means 25.

The consumption of energy, such as fossil fuel, is considered related to economic growth. Therefore, the quantity of money M serving as energy for economic activities can be replaced by energy consumption.

For example, by using the money-quantity-information acquiring means 12, data representing the energy consumption relating to, for example, economic activities is externally acquired and input to the computing means 15.

By using, for example, the money-quantity calculating means 22, the computing means 15 converts the data representing the energy consumption to data representing the quantity of money M and inputs the resulting data to the analytical computing means 25. The analytical computing means 25 may perform a predetermined computation for any financial or economic analysis, by using the data representing the quantity of money M determined as described above.

When discussing economy, savings are considered as reflected money. The Ricardian equivalence theorem states that if government bonds are issued and redeemed by the same generation, issuing government bonds now and raising taxes at the time of redemption has the same effect as raising taxes now.

That is, money is considered to be spent less and saved for future taxes. The money allocated to savings is considered one that is not used in economic activities (i.e., money with reduced energy).

A microwave (electromagnetic wave) is reduced in energy at every reflection. This means that when the quantity of money M is compared to the field intensity E as described above, the quantity of money M is reduced in energy at every reflection.

That is, in view of the theorem and others described above, it will be reasonable to replace a microwave (field intensity E) and the quantity of money M with each other.

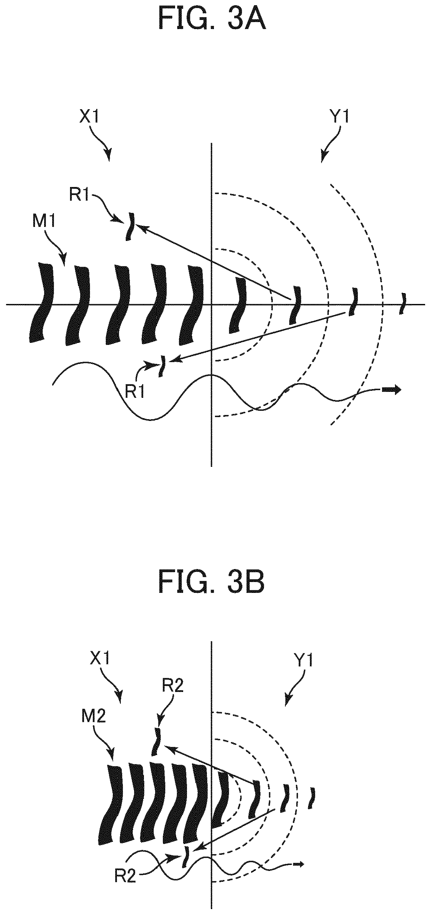

Figs. 3(a) and 3(b) are explanatory diagrams illustrating a relation between microwave wavelength and attenuation. Fig. 3(a) illustrates how a microwave M1 with a long wavelength propagates through a space X1 and penetrates into a material Y1, and Fig. 3(b) illustrates how a microwave M2 with a short wavelength propagates through the space X1 and penetrates into the material Y1.

As compared to the microwave M2 having a short wavelength (high frequency f), the microwave M1 attenuates more slowly inside the material Y1, and reaches deeper into and heats the material Y1. When the microwave M1 penetrates the material Y1, a reflected wave R1 (deposit 1) is generated at a deep position inside the material Y1, whereas when the microwave M2 penetrates the material Y1, a reflected wave R2 (deposit 2) is generated at a shallow position inside the material Y1.

Assume that the microwave wavelength (inverse of frequency f) is replaced by an interest rate (inverse of rotational coefficient r), and the material Y1 is replaced by an economic market. In this case, when the interest rate increases, money (quantity of money M) penetrates deep into the economic market, whereas when the interest rate decreases, the penetration of the money (quantity of money M) stops at a shallow point in the economic market.

Thus, the action and effect of money (quantity of money M) put into the economic market can also be described by replacing them with physical properties of the microwave (electromagnetic wave).

For example, when acquiring data representing information about the quantity of money as described above, the money-quantity-information acquiring means 12 also acquires data representing information about savings and inputs these pieces of data to the money-quantity calculating means 22 in the computing means 15.

The money-quantity calculating means 22 determines not only data representing the quantity of money M that can be replaced by a physical quantity as described above, but also determines data representing savings that can be replaced by a reflected wave in electromagnetic wave analysis, and outputs these pieces of data to the analytical computing means 25.

For example, the analytical computing means 25 treats the data representing savings as data having properties similar to the reflected wave, and performs a computation which involves, for example, modifying the data representing the quantity of money M received as input from the money-quantity calculating means 22 so as to bring the data close to the quantity of money M in actual economic activities.

Economic activities are controlled by human thought. Therefore, the rotational coefficient r may be used, for example, for analytical processing in relation to a brain wave frequency. For example, the lower limit of the rotational coefficient r is defined as the $\delta$-wave of the brain wave, and the upper limit of the rotational coefficient r is defined as the $\gamma$-wave of the brain wave.

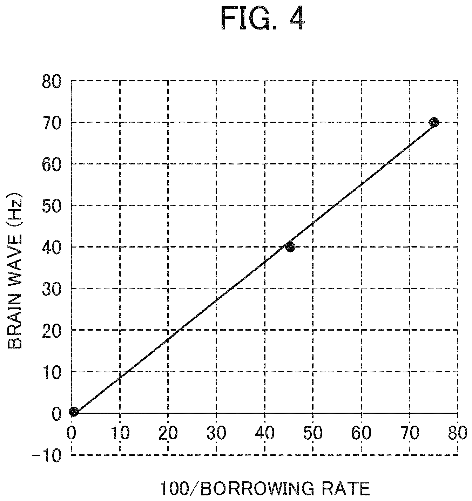

Fig. 4 is an explanatory diagram illustrating a relation between brain wave and the inverse of borrowing rate. In this diagram, the vertical axis represents the brain wave frequency and the horizontal axis represents the value obtained by multiplying the inverse of borrowing rate by 100.

For example, the brain wave frequency is defined to range from a $\delta$-wave frequency of 0.5 (Hz) to a $\gamma$-wave frequency of 70 (Hz). At the same time, the interest rate is defined to range from a lower limit of 1.33(%), which was implemented in the year 2017, to an upper limit of 365(%), which is practically difficult to be implemented.

Next, the point where the lower limit of the brain wave frequency (0.5 (Hz)) meets the value obtained by multiplying the inverse of the upper limit of the interest rate by 100 (100/365(%)) is defined as a lower limit point, and the point where the upper limit of the brain wave frequency (70 (Hz)) meets the value obtained by multiplying the inverse of the lower limit of the interest rate by 100 (100/1.33(%)) is defined as an upper limit point. The lower limit point and the upper limit point are plotted in the coordinate system having the vertical axis and the horizontal axis described above.

Also, for example, the point where the brain wave frequency during lucid dreaming (40 (Hz)) meets the value obtained by multiplying by 100 the inverse of the interest rate in the year 2007 when business recovery was obvious (100/2.21(%)) is plotted in the coordinate system (described above) and the plotted point is defined as an intermediate point.

The lower limit point, the intermediate point, and the upper limit point are arranged in a straight line as in Fig. 4, and this demonstrates that the brain wave frequency and the 100/borrowing rate (interest rate) have a linear correlation (proportional relation). This also indicates that the quantity of money M representing an economic situation and an electromagnetic wave have similar properties and are replaceable.

More specifically, the relative dielectric constant $\varepsilon\gamma$ and the dielectric loss tangent $\tan \delta$ at each specific frequency in the brain wave frequency range of 0.5 (Hz) to 70 (Hz) are applied to various analysis items in the industrial or occupational classification and organized as in Fig. 2, and the degree of security or anxiety in human (market sentiment) is reflected in the relative dielectric constant $\varepsilon\gamma$. Thus, from the quantity of money and the interest rate in each analysis area or analysis point, the electromagnetic wave analysis can be made either individually or collectively.

That is, by sequentially converting the varying quantity of money M to a brain wave frequency and applying an appropriate pathological analysis technique to the change pattern of the brain wave frequency, an economic situation represented, for example, by the quantity of money M can be analyzed.

For example, after the rotational-coefficient setting means 24 sets the rotational coefficient r as described above, the analytical computing means 25 converts the rotational coefficient r to a brain wave frequency using a conversion table stored in a database (not shown).

On the basis of pieces of information sequentially received as input from outside, or specifically, by using data representing for example the rotational coefficient r, the quantity of money M, the price coefficient P, and the GDP (Y) determined from data representing the pieces of information (e.g., by storing each piece of data during a predetermined period of time), the computing means 15 or the analytical computing means 25 performs a desired analytical computation relating to the financial or economic situation. When the brain wave frequency described above is used in the analysis, each piece of data used in the financial or economic analysis is processed in accordance with a pathological analysis technique used in analyzing a brain wave pattern, and for example, an index indicating the financial or economic situation in the period of time subjected to the analysis is determined.

## Claims

1. A financial or economic analysis system comprising:

   information acquiring means for acquiring information representing a financial or economic situation; and
   computing means for determining, by computation, a numerical value representing the financial or economic situation using information received as input from the information acquiring means,
   wherein from the information received as input from the information acquiring means, the computing means determines data that can be replaced by a physical quantity used in electromagnetic wave analysis, and uses the data in financial or economic analysis, the data including data representing a rotational coefficient relating to an interest rate, data representing the quantity of money, data representing a price coefficient, and data representing a GDP.

2. The financial or economic analysis system according to Claim 1, wherein the computing means determines any factor used in the financial or economic analysis using a relational equation,

$$Y = r \cdot M \cdot P$$

   where r is the data representing the rotational coefficient, M is the data representing the quantity of money, P is the data representing the price coefficient, and Y is the data representing the GDP.

3. The financial or economic analysis system according to Claim 1 or 2, wherein from data received as input from the information acquiring means, the computing means determines an object coefficient representing a degree of complexity in financial or economic activities and a human coefficient representing a degree of anxiety in market sentiment in the financial or economic activities, and determines the price coefficient being a product of the object coefficient and the human coefficient.

4. The financial or economic analysis system according to any one of Claims 1 to 3, wherein the computing means determines the data representing the quantity of money by using data received as input from the information acquiring means and representing energy consumption relating to economic activities.

5. The financial or economic analysis system according to any one of Claims 1 to 4, wherein from data received as input from the information acquiring means, the computing means determines data representing savings that can be replaced by a reflected wave in the electromagnetic wave analysis, and determines the data representing the quantity of money by taking into account the data representing the savings.

6. The financial or economic analysis system according to any one of Claims 1 to 5, wherein the computing means replaces the data representing the rotational coefficient with data representing a human brain wave frequency, and performs a computation for the financial or economic analysis in accordance with a pathological analysis technique relating to a brain wave pattern.

7. A financial or economic analysis method comprising:

   a first step of acquiring, by information acquiring means, information used in financial or economic analysis; and
   a second step of inputting the information acquired by the information acquiring means to computing means, determining data that can be replaced by a physical quantity used in electromagnetic wave analysis, and using the data in financial or economic analysis, the data including data representing a rotational coefficient relating to an interest rate, data representing the quantity of money, data representing a price coefficient, and data representing a GDP,
   wherein the second step includes a third step of determining, using the following relational equation, any factor used in the financial or economic analysis:

$$Y = r \cdot M \cdot P$$

   where r is the data representing the rotational coefficient, M is the data representing the quantity of money, P is the data representing the price coefficient, and Y is the data representing the GDP.

# FIG. 1

# FIG. 2

HALF-MONEY MARKET DEPTH

⇩

PENETRATION DEPTH (HALF-POWER DEPTH) (m)

# FIG. 3A

X1    Y1

R1

M1

R1

# FIG. 3B

X1    Y1

R2

M2

R2

# FIG. 4

Europäisches
Patentamt

European
Patent Office

Office européen
des brevets

# EUROPEAN SEARCH REPORT

Application Number

EP 20 17 6700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2003 216883 A (SONY CORP) 31 July 2003 (2003-07-31) * the whole document * ----- | 1-7 | INV. G06Q40/00 |

TECHNICAL FIELDS
SEARCHED (IPC)

G06Q

The present search report has been drawn up for all claims

| Place of search | Date of completion of the search | Examiner |
|---|---|---|
| The Hague | 6 August 2020 | Bassanini, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 17 6700

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2020

| Patent document cited in search report | Publication date | Patent family member(s) | Publication date |
|---|---|---|---|
| JP 2003216883 A | 31-07-2003 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003216883 A

- JP 2003223542 A